# FASCICULE DE BREVET EUROPEEN

(11) **EP 1 494 879 B1**
(45) Date de publication et mention de la délivrance du brevet: **01.07.2009**
(21) Numéro de dépôt: 03746330.4
(22) Date de dépôt: 09.04.2003
(51) Int. Cl.: B60H 3/00, B60H 3/06

(54) **DISPOSITIF DE PURIFICATION DE L'AIR DE L'HABITACLE D'UN VEHICULE**
LUFTREINIGUNGSVORRICHTUNG FÜR DIE FAHRGASTZELLE EINES KRAFTFAHRZEUGS
AIR PURIFICATION DEVICE FOR A MOTOR VEHICLE CABIN

(30) Priorité: 12.04.2002 FR 0204649
(43) Date de publication de la demande: 12.01.2005
(73) Titulaire: VALEO SYSTEMES THERMIQUES, 78321 Le Mesnil Saint Denis (FR)
(72) Inventeur: PAUMIER, Carine, F-78000 Versailles (FR); FEUILLARD, Vincent, F-78320 Le Mesnil Saint Denis (FR); LADRECH, Frédéric, F-78310 Maurepas (FR)
(86) Numéro de dépôt international: PCT/FR2003/001128
(87) Numéro de publication internationale: WO 2003/086791

(56) Documents cités:
- DE-U- 20 005 814
- JP-A- 11 028 933
- JP-A- 2000 255 257
- US-A- 5 433 772

## Description

### Arrière-plan de l'invention

La présente invention concerne le traitement des gaz odorants présents dans l'air de l'habitacle d'un véhicule automobile.

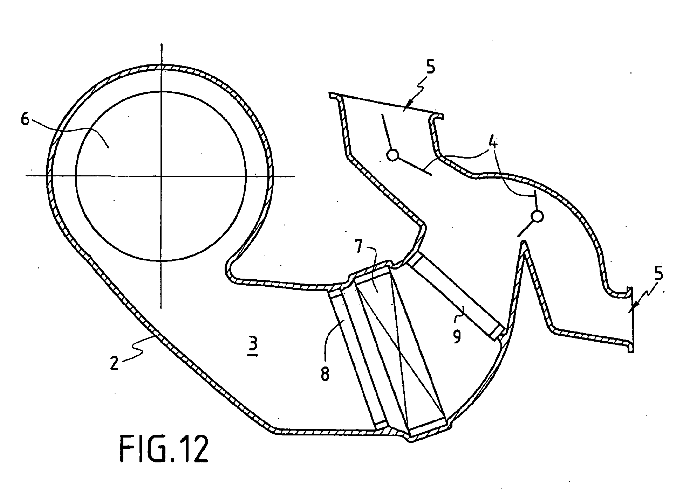

De façon traditionnelle, comme l'illustre la figure 12, une installation de chauffage/climatisation de véhicule automobile comporte un boîtier 2 délimitant un canal ou conduit de distribution d'air 3 qui, selon la position de volets commandés de mixage et de distribution 4, amène l'air à traiter vers des bouches de sortie (de chauffage et de désembuage/dégivrage 5) ouvrant dans l'habitacle. Le débit de l'air passant dans le canal est produit par un groupe moto-ventilateur ou pulseur 6 recevant de l'air extérieur ou de l'air de recirculation en provenance de l'habitacle. Le refroidissement de l'air est assuré par au moins un évaporateur (ou échangeur de chaleur 7) disposé dans le canal et classiquement précédé d'un filtre à particules 8 ou d'un filtre combiné intégrant un filtre à charbon actif ou plus généralement à adsorbant quelconque pour le traitement des gaz odorants ou nocifs. Un radiateur électrique 9 peuvent venir éventuellement compléter cette installation.

Avec un filtre à adsorbant, les molécules de gaz polluants sont retenues par un phénomène d'adsorption sur la surface poreuse de l'adsorbant, une désorption ou relargage de ces polluants pouvant être observée ensuite sous certaines conditions de température.

Malheureusement, outre que la structure même de ces filtres impose une forte perte de charge initiale et une faible durée de vie, estimée à environ 20000 km, il apparaît que ce filtre est d'une efficacité réduite quant à la destruction et/ou la limitation de la prolifération des bactéries ou micro-organismes présents dans le conduit de distribution et introduits dans l'habitacle par les bouches de distribution d'air.

Le document JP 2000 255257, qui est considéré comme l'art antérieur le plus proche, décrit un dispositif de purification de l'air dans lequel un agent photocatalyseur bactéricide est déposé sur la surface de l'évaporateur, une source lumineuse ultraviolette étant disposée entre le filtre à particules et l'évaporateur, de sorte à irradier la surface amont de l'évaporateur.

Ce dispositif peut cependant être amélioré.

### Objet et résumé de l'invention

L'invention a pour objet un dispositif de purification de l'air qui limite très fortement et mieux détruit les micro-organismes et les gaz véhiculés dans l'air ambiant, à l'origine des mauvaises odeurs apparaissant dans l'habitacle d'un véhicule automobile. Un but de l'invention est aussi de réaliser un dispositif de purification qui limite la pollution acoustique résultant du passage de l'air dans l'évaporateur de l'installation de climatisation du véhicule.

Un autre but de l'invention est de réaliser un dispositif de purification de l'air réduit en volume tout en ayant une efficacité optimale en un seul passage de l'air à travers ce dispositif.

Ces buts sont atteints grâce à un dispositif de purification de l'air de l'habitacle d'un véhicule comprenant une installation de climatisation comprenant un groupe moto-ventilateur délivrant un flux d'air dans un conduit de distribution d'air dans lequel est disposé un évaporateur ayant des surfaces amont et aval, caractérisé en ce qu'il comporte un agent photocatalyseur déposé sur la surface aval de l'évaporateur et en ce qu'une source lumineuse est disposée en aval de l'évaporateur par rapport au flux d'air et est orientée de sorte à irradier la majorité de la surface aval de l'évaporateur.

L'invention est remarquable en ce que les bactéries et microorganismes à l'origine des mauvaises odeurs, qui s'accumulent au niveau de l'évaporateur (formant un milieu humide), sont ainsi instantanément piégés et détruits sous l'effet de la photocatalyse.

Avantageusement, le dispositif de purification d'air comporte en outre, disposé en amont de l'évaporateur, un filtre à particules seul ou précédé d'un ioniseur lui même précédé d'une grille pour la filtration de particules de dimensions supérieures à un diamètre prédéterminé. Il peut aussi comporter une autre source lumineuse disposée juste en amont de l'évaporateur et en ce que la surface amont de l'évaporateur est recouverte d'une couche constituée d'un agent photocatalyseur.

La lumière émise par les sources lumineuses comportent une longueur d'onde comprise entre 200 nm et 400 nm.

De préférence, les sources lumineuses sont constituées chacune d'au moins un moyen d'émission lumineuse sans mercure ni plomb (avantageusement deux). Ce moyen d'émission lumineuse peut constituer en une lampe UV tubulaire, une lampe plate, une plaque comportant une pluralité de diodes électroluminescentes ou encore une grille comportant une pluralité de diodes électroluminescentes sur ses noeuds, de façon à permettre le passage du flux d'air.

Dans un mode de réalisation avantageusement du point de vue de la limitation des pollutions acoustiques, le dispositif de purification d'air peut comporter en outre un filtre à gaz disposé en aval de la source lumineuse et destiné à être traversé par le flux d'air, la source lumineuse irradiant une surface du filtre. La source lumineuse et le filtre à gaz sont séparés par une distance comprise entre 2 mm et 30 mm et la source lumineuse présente un premier lobe d'émission orienté de sorte à irradier la majorité de la surface du filtre et un second lobe d'émission orienté de sorte à irradier la majorité de la surface aval de l'évaporateur.

De préférence, ce filtre à gaz comprend une première couche de revêtement en fibres non tissées, une seconde couche de purification de l'air recouvrant la première couche et constituée d'un agent photocatalyseur intimement associé à des grains d'un adsorbant, et une troisième couche de revêtement en fibres non tissées recouvrant la seconde couche, l'ensemble de ces trois couches étant plissé en accordéon pour faire apparaître des ondulations ou plis en forme de V. L'agent photocatalyseur est avantageusement de l'oxyde de titane et l'adsorbant du charbon actif, de la zéolite ou un mélange des deux.

### Brève description des dessins

D'autres particularités et avantages du dispositif selon l'invention ressortiront à la lecture de la description faite ci-après, à titre indicatif mais non limitatif, en référence aux dessins annexés sur lesquels :
- la figure 1 illustre très schématiquement un dispositif de purification de l'air selon l'invention comportant une source lumineuse en aval de l'évaporateur ;
- la figure 2 illustre très schématiquement un dispositif de purification de l'air selon l'invention comportant un ioniseur en amont du filtre à particules ;
- la figure 3 illustre très schématiquement un dispositif de purification de l'air selon l'invention comportant une source lumineuse en aval et en amont de l'évaporateur ;
- les figures 4A et 4B sont deux vues en coupe montrant un exemple de montage de l'évaporateur ;
- la figure 5 illustre très schématiquement un exemple de réalisation du dispositif de purification d'air avec une seule lampe tubulaire ;
- la figure 6 illustre très schématiquement un exemple de réalisation du dispositif de purification d'air comportant des lampes plates ;
- les figures 7A et 7B illustrent très schématiquement deux exemples de réalisation du dispositif de purification d'air comportant des diodes électroluminescentes ;
- la figure 8 illustre très schématiquement une variante de réalisation du dispositif de purification d'air muni d'une grille de diodes électroluminescentes ;
- la figure 9 illustre très schématiquement un dispositif de purification de l'air selon l'invention comportant en outre un filtre à gaz en aval de l'évaporateur ;
- les figures 10A et 10B sont des vues partielles illustrant les différentes couches du filtre à gaz de la figure 9 ;
- la figure 11 est une vue en élévation d'une partie du dispositif de purification de l'air de la figure 9 ;
- la figure 11A est une vue en coupe selon le plan A-A de la figure 12 ;
- la figure 11B est une vue en coupe selon le plan B-B de la figure 12 montrant des lobes d'émissions lumineuses ; et
- la figure 12 illustre une installation de climatisation traditionnelle équipant un véhicule automobile.

### Description détaillée des modes de réalisation

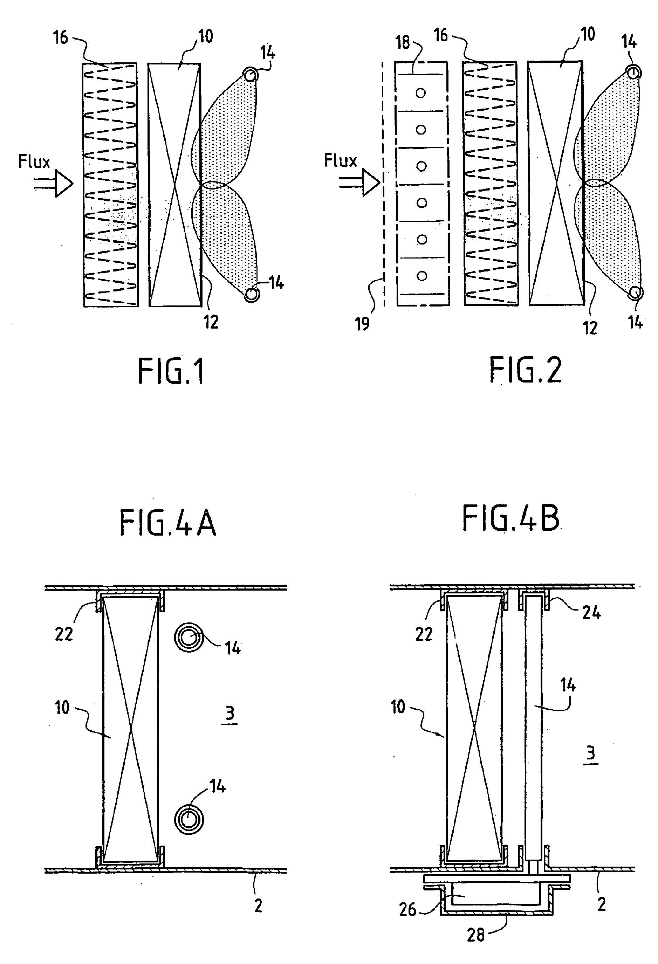

La figure 1 montre très schématiquement un premier exemple de réalisation d'un dispositif de purification de l'air selon l'invention destiné à être monté dans un conduit de distribution d'air d'une installation de climatisation (illustrée à la figure 12). Ce dispositif qui présente un volume réduit tout et en étant traversé par un fort débit d'air d'environ 450 m³/h, repose sur le principe de la photo catalyse et, à cet effet, l'évaporateur 10 est recouvert sur sa face aval 12 (par rapport au flux d'air traversant le conduit) d'un agent photocatalyseur, par exemple du dioxyde de titane « TiO2 », qui détruit les molécules de gaz polluant grâce à des réactions chimiques d'oxydation réduction sous l'effet d'un rayonnement UV produit par une ou plusieurs sources lumineuses 14 associées éventuellement à un réflecteur. On notera que la réflexion naturelle des rayonnement UV est augmentée de par la nature du matériau de l'évaporateur (en général de l'aluminium).

Ce revêtement sur la surface de l'évaporateur peut être réalisé très simplement par exemple en remplaçant le minéral siloxane, utilisé classiquement dans le revêtement polymère de l'évaporateur, directement par le TiO2. En outre, la photocatalyse peut être accrue en incluant des greffons fonctionnels dans la matrice polymère. Tout autre procédé de dépôt connu peut bien entendu être aussi utilisé, par exemple un procédé sol-gel.

De préférence, pour filtrer des particules contenues dans l'air, un filtre à particules 16 est monté en amont de l'évaporateur par rapport à l'écoulement de l'air.

Afin d'augmenter l'efficacité de filtration et de mieux filtrer les particules de petites dimensions (< 0.5 microns), ce filtre à particules, en fibres non tissées par exemple, peut être précédé par un ioniseur 18, comme l'illustre la figure 2. Ce ioniseur peut être avantageusement placé en entrée du conduit de distribution d'air.

Comme il est connu, l'ioniseur comprend une pluralité de plaques conductrices parallèles disposées en alternance avec des fils électriques de faible diamètre. Les fils sont alimentés au moyen d'un courant alternatif haute tension d'environ 5 kV produit par un module d'alimentation (non représenté) et les plaques sont reliées à la masse. Ce module qui comporte un ou plusieurs transformateurs peut être, et est de préférence, le même que celui alimentant la source lumineuse.

En amont de l'ioniseur 18 est montée avantageusement une grille 19 qui filtre des éléments grossiers présentant des dimensions supérieures à une taille déterminée, par exemple 5mm. Les particules en aval de la grille sont ainsi ionisées par l'ioniseur avant d'être collectées par le filtre à particules.

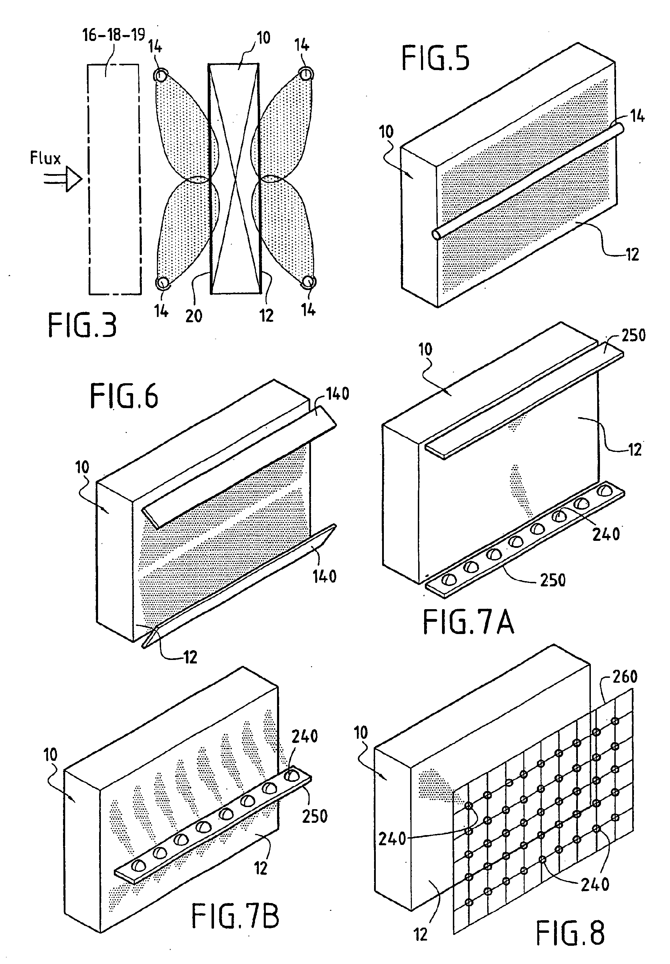

La figure 3 est une variante de réalisation du dispositif de purification d'air selon l'invention destinée à renforcer l'efficacité de la purification et dans laquelle la face amont 20 de l'évaporateur est également recouverte d'un agent photocatalyseur, par exemple du dioxyde de titane « TiO2 », soumis à l'irradiation d'une ou plusieurs secondes sources lumineuses 14. Comme dans les deux exemples précédents, on retrouve bien entendu, en amont de cette seconde source lumineuse, le filtre à particules 16 ou l'ensemble grille 19-ioniseur 18-filtre à particules 16.

Les figures 4A et 4B montrent un exemple de montage de l'ensemble évaporateur-lampes des figures 1 et 2 dans un conduit 2 de distribution d'air d'une installation de climatisation.

A cet effet, l'évaporateur 10 et la source lumineuse 14, constituée en l'espèce de deux lampes tubulaires présentant chacune une longueur sensiblement égale aux côtés longs de l'évaporateur, sont montés directement dans des logements 22, 24 disposés dans le conduit 3. Le module 26 nécessaire à l'alimentation des lampes est monté dans un logement 28 intégré à l'extérieur du conduit, hors du flux d'air, diminuant ainsi l'encombrement et donc la perte de charge.

La figure 5 illustre très schématiquement une variante de réalisation du dispositif de purification d'air comportant une seule lampe tubulaire 14 disposée sensiblement au milieu de la face aval 12 de l'évaporateur, de façon à irradier la majorité de cette surface utile de l'évaporateur.

Bien entendu, le nombre, la forme et la disposition des lampes montées dans le dispositif de purification de l'air pourra être différent de celui illustré sur les figures 4A, 4B ou 5. Notamment, une disposition de la lampe en diagonale est tout à fait envisageable.

La figure 6 illustre très schématiquement une variante de réalisation du dispositif de purification d'air comportant des lampes plates 140.

Chaque lampe plate 140 comprend un tube plat ayant deux côtés sensiblement parallèles en verre renfermant du Xénon. L'épaisseur du verre est de l'ordre de 1mm à 3mm. Des électrodes en argent ou en tungstène sont réalisées en sérigraphie, comme pour un circuit imprimé, sur un des côtés du tube plat.

Ces électrodes sont recouvertes d'une couche isolante en SiO2 et Al2O3 afin d'empêcher ou de limiter les pertes de rayons UV. En outre, l'intérieur de la lampe plate est recouvert de quelques couches moléculaires de phosphore.

Les lampes plates 140 sont bien entendu également orientées de sorte à irradier la majorité de la surface utile de l'évaporateur.

En variante (non représentée), une seule des deux lampes plates 140 peut être montée en position centrale afin d'irradier la face aval 12 de l'évaporateur.

Les figures 7A et 7B illustrent très schématiquement deux variantes de réalisation du dispositif de purification d'air comportant des diodes électroluminescentes 240 montées sur une plaque support 250. Dans ce cas, du fait des faibles tensions mises en oeuvre, le module d'alimentation 26 est en principe dépourvu de transformateurs.

Selon la figure 7A, les deux plaques 250 sont montées de la même manière que les lampes tubulaires 14 des figures 4A et 4B respectivement, les diodes électroluminescentes 240 étant montées sur un côté de chaque plaque 250 et orientées de sorte à irradier la majorité de la surface utile de l'évaporateur.

Par contre, dans l'exemple de la figure 7B, les diodes électroluminescentes 240 sont montées de part et d'autre sur une plaque unique 250 disposée sensiblement au milieu de l'évaporateur, à l'image de la configuration à lampe tubulaire unique de la figure 5.

Enfin, selon la figure 8, une pluralité de diodes électroluminescentes 240 est montée sur les noeuds d'une grille 260, disposée parallèlement au plan définis par la surface aval 12 de l'évaporateur, de façon à permettre le passage du flux d'air directement à travers elle.

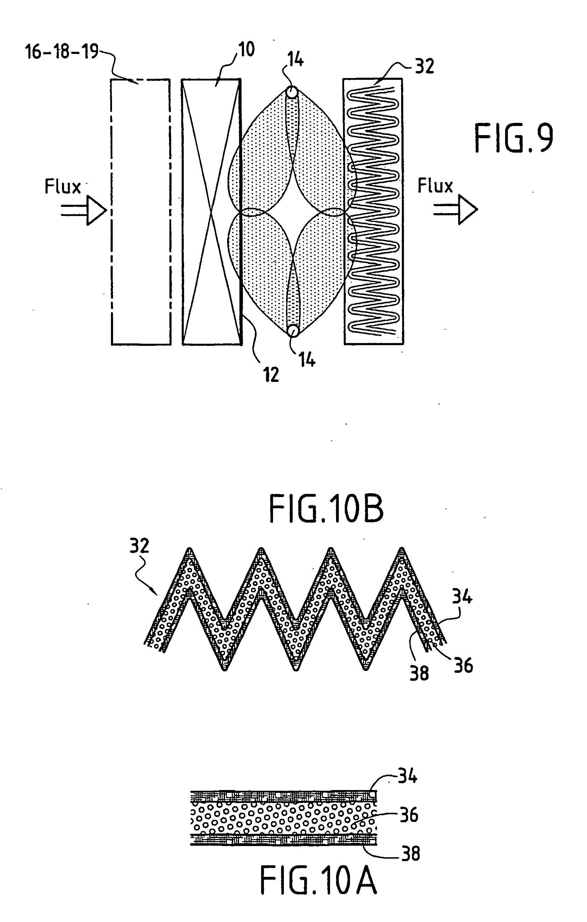

Un autre exemple de réalisation d'un dispositif d'air selon l'invention est illustré à la figure 9. Dans cette configuration améliorée, le dispositif de la figure 1 est complété en aval par un filtre à gaz destiné à assurer une filtration supplémentaire des gaz polluants ainsi qu'une limitation de la pollution acoustique engendrée par l'évaporateur (qui est une source de bruit). Sa disposition au plus près des bouches de sortie d'air permet en outre de distribuer aux passagers de l'habitacle un air plus propre (car issu directement de la filtration).

Ce filtre à gaz dont la structure sera décrite en détail plus avant, comporte un agent photocatalyseur intimement associé à des grains d'un adsorbant. L'adsorbant adsorbe les polluants instantanément en les piégeant dans ses pores sans les détruire. Ensuite, l'agent photocatalyseur détruit les molécules du polluant piégées sur la surface de l'adsorbant grâce à des réactions d'oxydation réduction. Cela permet de régénérer l'adsorbant et par conséquent d'augmenter la durée de vie du filtre de l'ordre de 4 à 5 fois celle d'un filtre classique à charbon actif et même d'atteindre environ celle du véhicule. Dans le cas, où ces réactions chimiques ne sont pas complètes, les sous-produits seront piégés par l'adsorbant et seront décomposés ultérieurement par l'agent photocatalyseur.

La réaction de photocatalyse est réalisée grâce aux rayonnements UV produits sur le filtre à gaz par une source lumineuse, en l'espèce la source 14 servant à l'irradiation de la surface aval 12 de l'évaporateur. Cette réaction est en outre favorisée par la disposition amont de la source lumineuse qui produit alors ses rayonnements dans le sens de l'écoulement de l'air dans le conduit. Or, les inventeurs ont pu mesurer que cette disposition améliorait de près de 20% l'effet photocatalytique.

Comme le montrent de façon très schématique les figures 10A et 10B, le filtre à gaz de la figure 9 est composé de trois couches. La première est une couche 34 de revêtement en fibres non tissées. La seconde est une couche 36 de purification de l'air recouvrant la première couche et constituée d'un agent photocatalyseur intimement associé à des grains d'un adsorbant. La troisième est également une couche 38 de revêtement en fibres non tissées recouvrant la seconde couche 36. En outre, cette troisième couche de revêtement peut aussi contenir un agent photocatalyseur afin d'augmenter l'efficacité du filtre.

Les couches de revêtement peuvent être en base PP, PET, PA ou PTFE. A titre d'exemple, l'épaisseur d'une couche de revêtement est comprise entre 0,1 mm et 2 mm.

L'adsorbant peut être composé de charbon actif, de zéolite, d'un mélange des deux, ou d'un tout autre adsorbant.

Le charbon actif est par exemple, constitué de grains de dimensions de l'ordre de 0,5 mm à 2 mm. Ces grains sont poreux avec des micropores de dimensions de l'ordre de 0,2 nm à 2 nm, des mesopores de dimensions de l'ordre de 2nm à 50 nm et des macropores de dimensions supérieures à 50nm.

En outre, le charbon actif est étendu entre les couches de revêtement avec une masse surfacique comprise entre 150 g/m2 et 450 g/m2.

L'agent photocatalyseur peut par exemple être composé de d'oxyde de titane « TiO2 » principalement de forme anatase ou d'un tout autre oxyde métallique ayant la propriété de photo catalyse.

L'oxyde de titane « TiO2 » est sous forme de poudre constitué de particules de dimensions de l'ordre de 40 nm à 500 nm.

Par conséquent, le type de particules de l'oxyde de titane et leur proportion en masse par rapport au charbon actif est choisie de sorte que les pores de ce dernier ne soient pas obstruées. Ce rapport en masse est par exemple, compris entre 1% et 20%.

L'ensemble de ces trois couches est plissé en accordéon pour faire apparaître des ondulations ou plis en forme de V, comme le montre la figure 10B, afin d'augmenter la surface utile du filtre et diminuer la perte de charge.

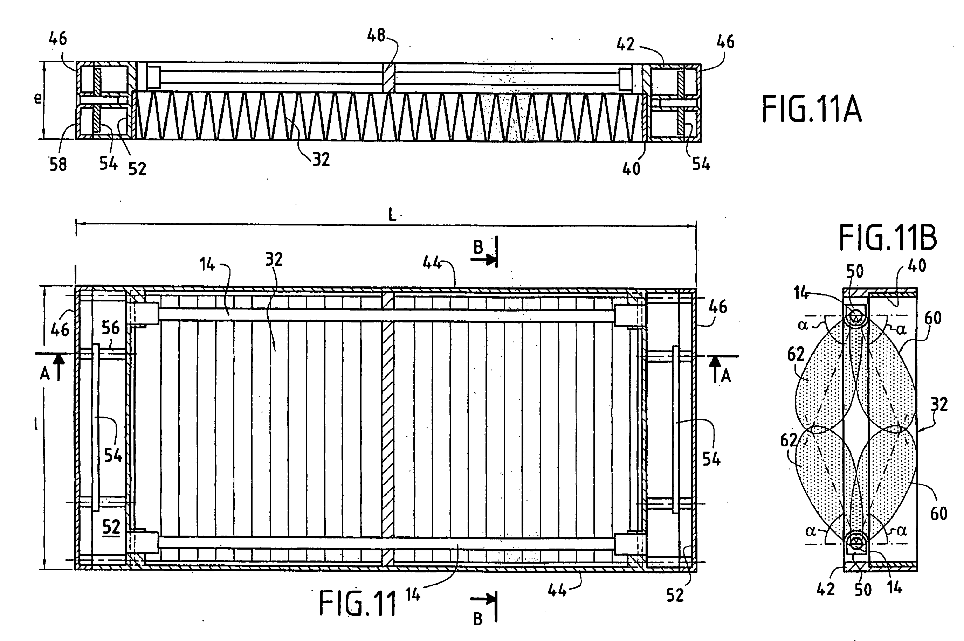

Pour faciliter son installation dans le conduit de distribution d'air 3, le filtre à gaz peut avantageusement être monté dans un cadre support 40, comme l'illustre les figures 11, 11A et 11B. Ce cadre 40 est par exemple, de forme rectangulaire dont la surface définit une surface apparente du filtre. Un cadre externe 42 épouse sensiblement le cadre support du filtre à gaz 32. Le cadre externe est par exemple en matière plastique.

Le cadre externe 42 est constitué de deux côtés longitudinaux 44 reliés par deux côtés transversaux 46 et peut comporter en outre, une traverse de renforcement centrale 48.

Les côtés transversaux 46 et éventuellement la traverse centrale 48 comportent des trous 50 destinés à recevoir une ou plusieurs lampes tubulaires 14 (deux lampes dans l'exemple illustré) afin d'irradier la surface du filtre à gaz 32.

Les côtés transversaux 46 présentent des logements 52 destinés à accueillir des transformateurs (non représentés) montés sur des plaques support 54. En effet, chaque plaque comporte des trous qui coopèrent avec des ergots ou plots 56 formés dans le logement. Les plaques peuvent être maintenues en place par un tout autre système de fixation.

Par ailleurs, les transformateurs sont protégés par des couvercles 58 qui se fixent sur les bords des logements 52.

Les transformateurs permettent de délivrer une tension alternative aux lampes 14. A titre d'exemple, chaque transformateur convertit une tension continue délivrée par la batterie du véhicule en une tension alternative de 1,5kV à 5kV d'une fréquence comprise entre 30kHz et 80 kHz.

Ces transformateurs sont en contact avec les lampes par l'intermédiaire de liaisons ou fils électriques (non représentés). Cependant, ils peuvent être en contact électrique direct avec les lampes, afin d'éliminer toute perturbation par rayonnement électromagnétique.

Chaque lampe peut être alimentée par un transformateur indépendant ou d'une manière similaire toutes les lampes peuvent être alimentées par un transformateur équivalent unique.

Ainsi, avec cette configuration, le filtre 32 encadré par son support 40, les lampes 14 et les plaques support des transformateurs 54 sont tous montés d'une manière compacte dans le cadre externe 42 pour former un dispositif montable et démontable aisément qui, lorsqu'il est disposé de manière à être traversé par un flux d'air pollué, sert à purifier cet air des polluants gazeux.

A titre d'exemple, le cadre externe 42 comporte une longueur (L) comprise entre 200 mm et 500 mm, une largeur (I) comprise entre 100 mm et 300 mm et une épaisseur (e) comprise entre 20 mm et 60 mm. La distance séparant les deux lampes 14 est de l'ordre de 80mm à 120mm et la distance moyenne entre une lampe et le filtre à gaz 32 est de l'ordre de grandeur de 2mm à 30mm.

En outre, une lampe 14 assure une intensité lumineuse par unité de surface comprise entre 0,5 mW/cm2 et 10 mW/cm2 à une distance d'environ 10 mm.

Ces lampes sont écologiques, sans mercure ni plomb et émettent une lumière d'une longueur d'onde comprise entre 200 nm et 400 nm, autrement dit, des UV de type A, B et C, appropriés pour rendre réactive une molécule de TiO2 afin de permettre une action photocatalytique efficace.

La topologie de la lumière émise par une lampe tubulaire 14 présente (voir la figure 11B) un premier lobe d'émission 60 et un second lobe d'émission 62.

Afin d'avoir une efficacité de purification maximale, le premier lobe d'émission 60 est orienté de sorte à irradier la majorité de la surface utile du filtre à gaz 32, c'est-à-dire la surface le plus en contact avec le flux d'air en tenant compte d'un effet de bord qui diminue le flux d'air sur les bords du filtre, et le second lobe d'émission est également orienté de sorte à irradier la majorité de la surface aval de l'évaporateur 10.

Dans l'exemple de la figure 11B, deux lampes 14 sont utilisées, et compte tenu des dimensions et des distances entre les éléments du dispositif explicité plus haut, les premier et second lobes des deux lampes sont dirigés vers les centres respectifs du filtre à gaz 32 et de l'évaporateur 10, de sorte que la médiane de chaque lobe fait un angle a de 35° à 50° par rapport à une perpendiculaire entre la lampe associée 14 et un plan moyen du filtre à gaz ou de l'évaporateur.

## Revendications

1. Dispositif de purification de l'air de l'habitacle d'un véhicule comprenant une installation de climatisation comprenant un groupe moto-ventilateur (6) délivrant un flux d'air dans un conduit de distribution d'air (3) dans lequel est disposé un évaporateur (10) ayant des surfaces amont (20) et aval (12), **caractérisé en ce qu'**il comporte un agent photocatalyseur déposé sur la surface aval de l'évaporateur et **en ce qu'**une source lumineuse (14 ; 140 ; 240) est disposée en aval de l'évaporateur par rapport au flux d'air et est orientée de sorte à irradier la majorité de la surface aval de l'évaporateur.

2. Dispositif de purification d'air selon la revendication 1, **caractérisé en ce qu'**il comporte en outre un filtre à particules (16) disposé en amont de l'évaporateur.

3. Dispositif de purification d'air selon la revendication 2, **caractérisé en ce qu'**il comporte en outre un ioniseur (18) disposé en amont du filtre à particules et précédé d'une grille (19) pour la filtration de particules de dimensions supérieures à un diamètre prédéterminé.

4. Dispositif de purification d'air selon la revendication 2 ou la 3, **caractérisé en ce qu'**il comporte en outre une autre source lumineuse (14) disposée juste en amont de l'évaporateur et **en ce que** la surface amont de l'évaporateur est recouverte d'une couche constituée d'un agent photocatalyseur.

5. Dispositif de purification d'air selon l'une quelconque des revendications 1 à 4, **caractérisé en ce que** la lumière émise par les sources lumineuses comportent une longueur d'onde comprise entre 200 nm et 400 nm.

6. Dispositif de purification d'air selon l'une quelconque des revendications 1 à 4, **caractérisé en ce que** les sources lumineuses sont constituées chacune d'au moins un moyen d'émission lumineuse (14 ; 140 ; 240) sans mercure ni plomb.

7. Dispositif de purification d'air selon la revendication 6, **caractérisé en ce qu'**il comporte deux moyens d'émissions lumineuses (14 ; 140 ; 240).

8. Dispositif de purification d'air selon la revendication 6, **caractérisé en ce que** le moyen d'émission lumineuse est une lampe UV tubulaire (14).

9. Dispositif de purification d'air selon la revendication 6, **caractérisé en ce que** le moyen d'émission lumineuse est une lampe plate (140).

10. Dispositif de purification d'air selon la revendication 6, **caractérisé en ce que** le moyen d'émission lumineuse est une plaque (250) comportant une pluralité de diodes électroluminescentes (240).

11. Dispositif de purification d'air selon la revendication 6, **caractérisé en ce que** le moyen d'émission lumineuse est une grille (260) comportant une pluralité de diodes électroluminescentes (240) sur ses noeuds, de façon à permettre le passage du flux d'air.

12. Dispositif de purification d'air selon l'une quelconque des revendications 1 à 4, **caractérisé en ce qu'**il comporte en outre un filtre à gaz (32) disposé en aval de la source lumineuse et destiné à être traversé par le flux d'air, la source lumineuse irradiant une surface du filtre.

13. Dispositif de purification d'air selon la revendication 12, **caractérisé en ce que** la source lumineuse et le filtre à gaz sont séparés par une distance comprise entre 2 mm et 30 mm.

14. Dispositif de purification d'air selon la revendication 12, **caractérisé en ce que** la source lumineuse (14) présente un premier lobe d'émission orienté de sorte à irradier la majorité de la surface du filtre (32) et un second lobe d'émission orienté de sorte à irradier la majorité de la surface aval (12) de l'évaporateur.

15. Dispositif de purification d'air selon la revendication 12, **caractérisé en ce que** le filtre à gaz comprend une première couche (34) de revêtement en fibres non tissées, une seconde couche (36) de purification de l'air recouvrant la première couche et constituée d'un agent photocatalyseur intimement associé à des grains d'un adsorbant, et une troisième couche (38) de revêtement en fibres non tissées recouvrant la seconde couche, l'ensemble de ces trois couches étant plissé en accordéon pour faire apparaître des ondulations ou plis en forme de V.

16. Dispositif de purification d'air selon la revendication 1, 4 ou 15, **caractérisé en ce que** l'agent photocatalyseur est de l'oxyde de titane.

17. Dispositif de purification d'air selon la revendication 15, **caractérisé en ce que** l'adsorbant est du charbon actif, de la zéolite ou un mélange des deux.

18. Installation de climatisation de l'habitacle d'un véhicule automobile comprenant un groupe moto-ventilateur (6) délivrant un flux d'air dans un conduit de distribution d'air (3) dans lequel est disposé au moins un évaporateur (7), **caractérisé en ce qu'**il comporte un dispositif de purification d'air selon l'une quelconque des revendications 1 à 17.

## Claims

1. Device for purifying the air of a vehicle interior comprising an air conditioning installation comprising an engine blower (6) supplying an air flow into an air distribution canal (3) inside which is located an evaporator (10) which has upstream (20) and downstream (12) surfaces, **characterised in that** it features a photo-catalytic agent deposited on the downstream surface of the evaporator and **in that** a light source (14; 140; 240) is positioned downstream of the evaporator with respect to the air flow and is orientated so that it irradiates the majority of the downstream surface of the evaporator.

2. Air purification device according to claim 1, **characterised in that** it further comprises a particle filter (16) positioned upstream of the evaporator.

3. Air purification device according to claim 2, **characterised in that** it further comprises an ioniser (18) positioned upstream of the particle filter and is preceded by a grid (19) to filter particles that are larger than a predetermined diameter.

4. Air purification device according to claim 2, **characterised in that** it further comprises another light source (14) positioned just upstream of the evaporator and **in that** the upstream surface of the evaporator is covered with a layer formed by a photo-catalytic agent.

5. Air purification device according to any of claims 1 to 4, **characterised in that** the light emitted by the light sources has a wave length of between 200 nm and 400 nm.

6. Air purification device according to any of claims 1 to 4, **characterised in that** the light sources are each formed by at least one light emitting means (14; 140; 240) that does not contain mercury or lead.

7. Air purification device according to claim 6, **characterised in that** it comprises two light emitting means (14; 140; 240).

8. Air purification device according to claim 6, **characterised in that** the light emitting means is a tubular UV lamp (14).

9. Air purification device according to claim 6, **characterised in that** the light emission means is a flat lamp (140).

10. Air purification device according to claim 6, **characterised in that** the light emission means is a plate (250) comprising a plurality of electro-luminescent diodes (240).

11. Air purification device according to claim 6, **characterised in that** the light emission means is a grid comprising a plurality of electro-luminescent diodes (240) on its nodes so as to permit the passage of an air flow.

12. Air purification device according to any of claims 1 to 4, **characterised in that** it further comprises a gas filter (32) positioned downstream of the light source and designed to have an air flow pass through it, wherein the light source irradiates a surface of the filter.

13. Air purification device according to claim 12, **characterised in that** the light source and the gas filter are separated by a distance of between 2 mm and 30 mm.

14. Air purification device according to claim 12, **characterised in that** the light source (14) has a first emission lobe orientated so that it irradiates the majority of the surface of the filter (32) and a second emission lobe orientated so that it irradiates the majority of the downstream surface (12) of the evaporator.

15. Air purification device according to claim 12, **characterised in that** the gas filter comprises a first layer (34) of a non-woven fibre coating, wherein a second layer (36) of air purification covers the first layer and is formed by a photo-catalytic agent closely associated to grains of an adsorbent, and a third layer (38) of a non-woven fibre coating covering the second layer, wherein all of these three layers are folded into an accordion to show the V-shaped undulations or folds.

16. Air purification device according to claims 1, 4 or 15, **characterised in that** the photo-catalytic agent is titanium oxide.

17. Air purification device according to claim 15, **characterised in that** the adsorbent is activated carbon, zeolite or a mixture of the two.

18. Air conditioning installation for a vehicle interior comprising an engine blower (6) supplying an air flow into an air distribution canal (3) inside which is located at least one evaporator (7), **characterised in that** it comprises an air purification device according to any of claims 1 to 17.

## Patentansprüche

1. Vorrichtung zum Reinigen der Luft im Fahrgastraum eines Fahrzeugs, die eine Klimaanlage besitzt, die wiederum eine Gebläseeinheit (6) besitzt, die einen Luftstrom in eine Luftverteilungsleitung (3) bläst, in der ein Verdampfer (10) eingebaut ist, der eine eintrittsseitige Fläche (20) und eine austrittsseitige Fläche (12) hat, **dadurch gekennzeichnet, dass** sie eine auf der austrittsseitigen Fläche des Verdampfers aufgetragene Fotokatalysatorschicht besitzt und dass hinter dem Verdampfer in Bezug auf den Luftstrom eine Lichtquelle (14; 140; 240) angeordnet und so ausgerichtet ist, dass sie den größten Teil der austrittsseitigen Fläche des Verdampfers bestrahlt.

2. Vorrichtung zum Luftreinigen nach Anspruch 1, **dadurch gekennzeichnet, dass** sie zudem einen vor dem Verdampfer angebrachten Partikelfilter (16) besitzt.

3. Vorrichtung zum Luftreinigen nach Anspruch 2, **dadurch gekennzeichnet, dass** sie zudem einen vor dem Partikelfilter angebrachten Ionisierer (18) besitzt, vor dem wiederum ein Gitter (19) zum Herausfiltern von Partikeln über einer bestimmten Größe angebracht ist.

4. Vorrichtung zum Luftreinigen nach Anspruch 2 oder 3, **dadurch gekennzeichnet, dass** sie zudem eine weitere Lichtquelle (14) besitzt, die direkt vor dem Verdampfer angebracht ist, und dass die eintrittsseitige Fläche des Verdampfers mit einer aus einem Fotokatalysator bestehenden Schicht bedeckt ist.

5. Vorrichtung zum Luftreinigen nach einem der Ansprüche 1 bis 4, **dadurch gekennzeichnet, dass** das von den Lichtquellen ausgestrahlte Licht eine Wellenlänge zwischen 200 und 400 nm hat.

6. Vorrichtung zum Luftreinigen nach einem der Ansprüche 1 bis 4, **dadurch gekennzeichnet, dass** die Lichtquellen jeweils aus mindestens einem quecksilber- und bleifreien Lichtstrahlungsmittel (14; 140; 240) bestehen.

7. Vorrichtung zum Luftreinigen nach Anspruch 6, **dadurch gekennzeichnet, dass** sie zwei Lichtstrahlungsmittel (14; 140; 240) besitzt.

8. Vorrichtung zum Luftreinigen nach Anspruch 6, **dadurch gekennzeichnet, dass** das Lichtstrahlungsmittel eine röhrenförmige UV-Lampe (14) ist.

9. Vorrichtung zum Luftreinigen nach Anspruch 6, **dadurch gekennzeichnet, dass** das Lichtstrahlungsmittel eine Flachampe (140) ist.

10. Vorrichtung zum Luftreinigen nach Anspruch 6, **dadurch gekennzeichnet, dass** das Lichtstrahlungsmittel eine Platte (250) ist, die eine Mehrzahl von elektrolumineszenten Dioden (240) besitzt.

11. Vorrichtung zum Luftreinigen nach Anspruch 6, **dadurch gekennzeichnet, dass** das Lichtstrahlungsmittel ein Gitter (260) ist, das auf seinen Gitterknoten eine Mehrzahl von elektrolumineszenten Dioden (240) besitzt, so dass ein Durchlassen der Luft möglich ist.

12. Vorrichtung zum Luftreinigen nach einem der Ansprüche 1 bis 4, **dadurch gekennzeichnet, dass** sie zudem einen hinter der Lichtquelle angebrachten Gasfilter (32) besitzt, der dazu dient, vom Luftstrom durchströmt zu werden, während die Lichtquelle eine Fläche des Filters bestrahlt.

13. Vorrichtung zum Luftreinigen nach Anspruch 12, **dadurch gekennzeichnet, dass** die Lichtquelle und der Gasfilter in einem Abstand von 2 mm bis 30 mm voneinander angebracht sind.

14. Vorrichtung zum Luftreinigen nach Anspruch 12, **dadurch gekennzeichnet, dass** die Lichtquelle (14) eine erste Lichtkeule, die so ausgerichtet ist, dass sie den größten Teil der Fläche des Filters (32) beleuchtet, und eine zweite Lichtkeule, die so ausgerichtet ist, dass sie den größten Teil der austrittsseitigen Fläche des Verdampfers beleuchtet, besitzt.

15. Vorrichtung zum Luftreinigen nach Anspruch 12, **dadurch gekennzeichnet, dass** der Gasfilter eine erste Schicht (34) aus Faservlies als Abdeckung, eine zweite Schicht (36) zur Luftreinigung, die die erste Schicht bedeckt und aus einem eng mit dem Granulat eines Sorptionsmittels verbundenen Fotokatalysator besteht, sowie eine dritte Schicht (38) aus Faservlies als Abdeckung besitzt, die die zweite Schichte bedeckt, während alle drei Schichten zickzackförmig gefaltet sind, um wellen- oder V-förmige Falten zu bilden.

16. Vorrichtung zum Luftreinigen nach Anspruch 1, 4 oder 15, **dadurch gekennzeichnet, dass** der Fotokatalysator aus Titanoxid besteht.

17. Vorrichtung zum Luftreinigen nach Anspruch 15, **dadurch gekennzeichnet, dass** das Sorptionsmittel aus Aktivkohle, aus Zeolith oder aus einer Mischen aus beiden besteht.

18. Klimaanlage für den Fahrgastraum eines Kraftfahrzeugs, die eine Gebläseeinheit (6) besitzt, die einen Luftstrom in eine Luftverteilungsleitung (3) bläst, in der mindestens ein Verdampfer (7) eingebaut ist, **dadurch gekennzeichnet, dass** sie eine Vorrichtung zur Luftreinigung nach einem der Ansprüche 1 bis 17 besitzt.
